Europäisches Patentamt

European Patent Office

Office européen des brevets

(19)

(11) Numéro de publication: **0 016 873**
**A1**

## (12) DEMANDE DE BREVET EUROPEEN

(21) Numéro de dépôt: **79200166.1**

(22) Date de dépôt: **04.04.79**

(51) Int. Cl.³: **F 24 J 3/02**

(43) Date de publication de la demande: **15.10.80**
**Bulletin 80/21**

(84) Etats contractants désignés: **BE DE FR IT**

(71) Demandeur: **ATELIERS DE CONSTRUCTIONS ELECTRIQUES DE CHARLEROI (ACEC) Société Anonyme, 54, Chaussée de Charleroi, B-1060 Bruxelles (BE)**

(72) Inventeur: **Leglise, Alexandre, Joseph, 146, rue Chêne Bonnet, B-6110 Montigny-le-Tilleul (BE)**

(74) Mandataire: **Bossard, Franz et al, ACEC - Service des Brevets Boîte Postale 4, B-6000 Charleroi (BE)**

(54) **Installation de changement de position d'un panneau collecteur d'énergie solaire.**

(57) Une installation de changement de position d'un panneau collecteur d'énergie solaire comprend un bâti (1) équipé de paliers (2, 3) pour un support mobile (5) d'un panneau (6) d'énergie solaire entraîné par un dispositif de commande (8, 9) de position. Suivant l'invention, le mouvement du support mobile (5) est commandé par intermittence par un dispositif de commande électromagnétique (8, 9).

EP 0 016 873 A1

0016873

## INSTALLATION DE CHANGEMENT DE POSITION D'UN PANNEAU COLLECTEUR D'ENERGIE SOLAIRE.

La présente invention a pour objet une installation de changement de position d'un panneau collecteur d'énergie solaire, notamment un panneau support de piles à semiconducteurs fournissant un courant en fonction de l'intensité du rayonnement solaire reçu.

Il existe déjà de telles installations comprenant un bâti équipé de paliers pour un support mobile d'un panneau d'énergie solaire, entraîné par un dispositif de commande de position à action continue. Lorsqu'un tel dispositif de commande de position est constitué par un pignon engrené dans une roue dentée, il est nécessaire de veiller à un graissage convenable des surfaces de friction ce qui n'est pas facile à réaliser lorsque l'installation est érigée dans une région désertique, sans surveillance permanente, ou du moins à intervalles réguliers et rapprochés.

Le but de l'invention est une installation du genre décrit qui peut facilement fonctionner sans surveillance pendant plusieurs semaines. L'invention est caractérisée par un dispositif de commande électromagnétique intermittente pour le mouvement du support mobile, consommant du courant uniquement pendant l'actionnement du support mobile.

L'invention est expliquée ci-dessous par rapport à un exemple d'une forme d'exécution représentée au dessin annexé. La figure 1 du dessin est une vue en élévation d'un dispositif suivant l'invention. Le figures 2 et 3 montrent des détails de deux variantes de dispositifs de commande de position.

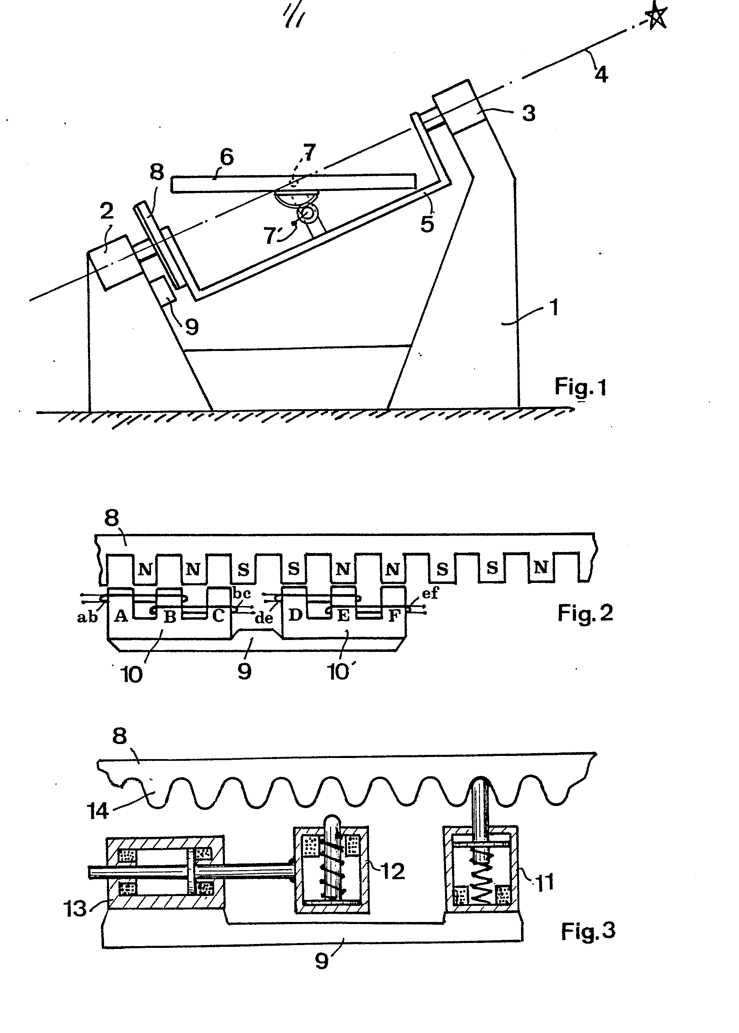

A la figure 1, un bâti 1 présente deux paliers 2, 3 alignés suivant un axe 4 passant par l'étoile polaire. Dans les paliers 2 et 3 reposent les extrémités d'un support mobile 5, en forme d'étrier sur

24.15/1758

lequel est monté un panneau collecteur d'énergie solaire 6. Ce panneau mesure par exemple 10m de diamètre et est garni de piles à semi-conducteurs fournissant un courant en fonction de l'intensité du rayonnement solaire qui les frappe. Le panneau collecteur 6 est solidarisé avec le support mobile 5 par l'intermédiaire d'une articulation 7 disposée à l'endroit du centre de gravité du panneau. Le support mobile 5 tel que montré à la figure 1 permet d'imposer au panneau 6 une rotation journalière commandée automatiquement , qui suit l'angle d'ascension droite du soleil et de tenir compte soit automatiquement, soit au moyen d'ajustements manuels par exemple grâce à une manivelle 7' des variations saisonnières de la déclinaison de l'orbite solaire, la déclinaison maximum de $\pm$ 23°30' étant atteinte aux solstices. Si l'on admet que l'efficacité du panneau collecteur d'énergie solaire peut tomber à 92% du maximum aux moments des solstices, il n'est pas nécessaire de prévoir un support mobile 5 permettant de tenir compte de la déclinaison du soleil. Il suffit alors de suspendre le panneau 6 parallèlement à l'axe 4 et de le faire suivre l'ascension droite du soleil lors de sa progression sur son orbitre. Comme la progression de l'ascension droite du soleil est mesurée généralement en heures et minutes, une horloge constitue le moyen le plus simple pour commander ce mouvement.

A la figure 2, on a représenté un dispositif suivant l'invention, qui permet de réaliser une progression automatique intermittente de la rotation journalière du panneau 6 autour de l'axe 4. Ce dispositif est constitué d'un rotor 8 fixé sur le support mobile 5 en forme d'étrier et d'un stator 9 en deux parties, 10 et 10', fixé sur le bâti 1. Le rotor 8 est garni de pôles équidistants N,S formés par des aimants permanents et chacune des deux parties du stator 9, qui sont en fer doux, porte au moins trois pôles A,B,C ou D,E,F d'un pas identique à celui des pôles du rotor 8. Les pôles A,B,C de la partie 10 et les pôles D,E,F de la partie 10' du stator 9 sont décalés les uns par rapport aux autres d'un demi pas polaire et sont entourés de bobines d'excitation ab, bc; de, ef.

Pour effectuer un mouvement d'une amplitude de 4 pôles vers la gauche, par exemple, les bobines sont excitées l'une après l'autre dans l'ordre du tableau ci-dessous:

| | Bobines | Pôles | | Bobines | Pôles |
|---|---|---|---|---|---|
| (1°) | "ab" | A et B devenant S | (2°) | "de" | D et E devenant S |
| (3°) | "bc" | B et C devenant N | (4°) | "ef" | E et F devenant N |
| (5°) | "ab" | A et B devenant N | (6°) | "de" | D et E devenant N |
| (7°) | "bc" | B et C devenant S | (8°) | "ef" | E et F devenant S |

En excitant les bobines dans l'ordre inverse, c'est-à-dire dans l'ordre du tableau ci-après, le rotor exécute un mouvement d'une amplitude de 4 pôles vers la droite.

| | Bobines | Pôles | | Bobines | Pôles |
|---|---|---|---|---|---|
| (1°) | "bc" | B et C devenant S | (2°) | "de" | D et E devenant N |
| (3°) | "ab" | A et B devenant N | (4°) | "ef" | E et F devenant N |
| (5°) | "bc" | B et C devenant N | (6°) | "de" | D et E devenant S |
| (7°) | "ab" | A et B devenant S | (8°) | "ef" | E et F devenant S |

Pour exécuter de cette manière des mouvements intermittents de par exemple 8°, on peut prévoir un rotor de 180 pôles qui, à chaque mouvement intermittent avance de quatre pôles ou encore, au prix d'une logique de commande quelque peu plus compliquée, un rotor de 45 pôles qui a chaque mouvement intermittent avance d'un pôle. L'avantage de ce dispositif réside dans le fait qu'aucune friction n'existe entre le rotor 8 et le stator 9 ce qui est un avantage considérable pour une installation fonctionnant sans surveillance dans des régions désertiques.

Une progression automatique intermittente de 8° ou d'une ascension droite de 32 minutes est largement suffisante pour maintenir constamment l'efficacité du panneau collecteur d'énergie solaire au dessus de 99%. Ce même résultat peut encore être atteint avec des progressions automatiques intermittentes d'une ascension droite d'une heure (Ecart maximum d'un angle de 7,5° entre les rayons du soleil et la droite perpendiculaire au panneau d'énergie solaire). Pour cette même raison, il est possible de corriger la déclinaison du panneau 6 tous les quinze jours ou tous les mois, car même aux environs des équinoxes, la variation de la déclinaison du soleil ne dépasse pas 3° par semaine.

Un autre dispositif permettant de réaliser une progression automatique de la rotation journalière autour de l'axe 4 est représentée schématiquement à la figure 3. Trois dispositifs électromagnétiques 11, 12, 13 permettent d'assurer un mouvement d'une crémaillère circulaire 14. Un premier dispositif 11 muni d'un doigt, solidaire d'une base statorique 9 engrène avec la crémaillère circulaire 14 à l'état de repos. Un deuxième dispositif à doigt 12 engrène avec la crémaillère lorsqu'il est excité et libère la crémaillère à l'état de repos. Le dispositif à doigt 12 est mobile et est supporté par une barre actionnée par un dispositif électromagnétique 13 solidaire de la base statorique 9. Le dispositif 13 peut être excité par deux bobines pour exécuter soit un mouvement vers la gauche, soit un mouvement vers la droite. Contrairement aux dispositifs 11 et 12 il n'est pas équipé d'un ressort de rappel qui définit une position de repos.

Le dispositif de commande de position 11,12,13 agit de la manière suivante, par exemple pour exécuter un mouvement vers la gauche.

    1° Excitation de la bobine de droite du dispositif 13

    2° Excitation du dispositif 12

    3° Coupure de la bobine de droite du dispositif 13 et excitation du dispositif 11

    4° Excitation de la bobine de gauche du dispositif 13

    5° Coupure du dispositif 11

    6° Coupure de la bobine de gauche du dispositif 13 et coupure du dispositif 12.

Des variantes qui diffèrent de l'exemple décrit sont évidemment possibles. Le panneau collecteur peut notamment être suspendu sur deux axes quelconques par exemple un axe vertical et un axe horizontal tournant autour de l'axe vertical. Dans un pareil cas, il peut être avantageux de commander le mouvement intermittent du panneau par un dispositif de commande automatique actionné par un détecteur d'écart de la position du soleil de l'orientation du panneau.

Les dispositifs de commande électromagnétiques décrits ci-dessus ont l'avantage d'éviter des engrenages et des mouvements continuels commandés par exemple par un moteur électrique dont la puissance devrait être limitée, pour répondre aux exigences d'une sage économie. Par contre, grâce aux périodes très courtes de fonctionnement, les dispositifs de commande intermittente électromagnétiques peuvent être dotés d'une puissance confortable, pour commander les mouvements nécessaires même si du sable ou des petits animaux perturbent le fonctionnement.

Si comme décrit ci-dessus, le mouvement intermittent est réalisé par entités de quatre pôles, la commande d'un tel mouvement part toujours d'une position initiale dans laquelle le pôle D se trouve en face d'un pôle Sud et les pôles E et F en face de deux pôles Nord. De cette manière chaque déplacement suit le même programme en 8 pas décrit ci-dessus.

Il est évidemment possible d'effectuer des déplacements d'une amplitude d'un demi-pas polaire seulement. Dans un tel cas il est nécessaire de commander l'excitation des divers bobines en fonction de la position de départ. Cette position de départ peut être détectée au moyen de circuits logiques qui sont temporairement raccordées aux mêmes bobines ab, bc, de, ef et le résultat de cette détection détermine ensuite l'ordre d'excitation des bobines dans la phase de déplacement.

REVENDICATIONS

1. Installation de changement de position d'un panneau collecteur d'
énergie solaire comprenant un bâti (1) équipé de paliers (2,3) pour un
support mobile (5) d'un panneau (6) d'énergie solaire entraîné par un
dispositif de commande (8,9,10,11,12,13) de position,
caractérisé par un dispositif de commande électromagnétique (8,9,
10,11,12,13) intermittent pour le mouvement du support mobile (5).

2. Installation suivant la revendication 1, caractérisée en ce que le
dispositif de commande électromagnétique intermittent comprend un
rotor (8) garni de pôles équidistants en aimants permanents (N,S) et
deux stators (9,10) à au moins trois pôles chacun d'un pas identique à
celui des pôles du rotor, en ce que les pôles des stators (9,10) sont
équipés de bobines ab, bc, de, et fg et en ce que les deux stators
sont décalés l'un par rapport à l'autre d'un demi pas polaire.

3) Installation suivant la revendication 1, caractérisée en ce que le
dispositif de commande électromagnétique intermittent comprend trois
dispositifs électromagnétiques, un premier (11) muni d'un doigt engrenant avec une crémaillère circulaire 14 à l'état de repos et dégagé de
la crémaillèreà l'état excité, un deuxième (12) muni d'un doigt dégagé
de la crémaillère (14) à l'état de repos et engrenant avec la crémaillère (14) à l'état excité et un troisième dispositif (13) se trouvant
en position médiane à l'état de repos et déplaçant le deuxième dispositif (12) d'un pas d'encoche de la crémaillère lorsqu'il est excité.

4. Installation suivant une des revendications précédentes, caractérisée en ce que le mouvement intermittent du panneau est commandé par un
dispositif de commande électromagnétique actionné par un détecteur d'
écart de la position du soleil de l'orientation du panneau.

5. Installation suivant la revendication 2, caractérisée en ce que
les mêmes bobines (ab,bc,de,fg) sont utilisées pour la commande du
déplacement et pour servir de détecteur de la position de départ, avant
la commande du déplacement.

Fig. 1

Fig. 2

Fig. 3

Office européen
des brevets

**RAPPORT DE RECHERCHE EUROPEENNE**

0016873
Numéro de la demande

EP 79 200 166.1

## DOCUMENTS CONSIDERES COMME PERTINENTS

| Catégorie | Citation du document avec indication, en cas de besoin, des parties pertinentes | Revendication concernée |
|---|---|---|
| A | FR - A1 - 2 257 067 (PAGES)<br>* document complet * | |
| A | FR - A1 - 2 343 207 (PAGES et al.)<br>* fig. 5 * | |
| A | DE - A1 - 2 805 425 (N.V. PHILIPS)<br>* document complet * | |
| A | DE - A1 - 2 712 404 (COMMISSARIAT A L'ENERGIE ATOMIQUE)<br>* document complet * | |
| A | US - A - 4 055 161 (JONES)<br>* fig. 5 et 6 * | |
| A | DE - A1 - 2 436 900 (FUJITSU LTD.)<br>* fig. 1A à 1C * | 2 |
| A | DE - B2 - 2 232 334 (XYNETICS)<br>* fig. 2a et 2b * | 2 |

**CLASSEMENT DE LA DEMANDE (Int. Cl.3)**

F 24 J 3/02

**DOMAINES TECHNIQUES RECHERCHES (Int. Cl.3)**

F 03 G 7/00
F 24 J 3/00
G 05 D 3/00
H 02 K 41/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

X Le présent rapport de recherche a été établi pour toutes les revendications

| Lieu de la recherche | Date d'achèvement de la recherche | Examinateur |
|---|---|---|
| Berlin | 13-11-1979 | PIEPER |

OEB Form 1503.1  06.78